# EUROPEAN PATENT APPLICATION

(11) **EP 3 524 830 A1**
(43) Date of publication of application: **14.08.2019**
(21) Application number: 18201524.8
(22) Date of filing: 19.10.2018
(51) Int. Cl.: F16B 7/18, F16B 7/22, A47B 47/00, F16B 12/44

(54) **EXPANSION CONNECTOR FOR CONNECTING SQUARE TUBES**

(30) Priority: 09.02.2018 CN 201810132817
(71) Applicant: Ningbo Xinyun Import & Export Co., Ltd., Ningbo, Zhejiang (CN)
(72) Inventor: DENG, Zhiguang, Ningbo, Zhejiang (CN)
(74) Representative: Patentanwälte Gierlich & Pischitzis Partnerschaft mbB

(57) **Abstract**

Embodiments of the present disclosure disclose an expansion connector for connecting square tubes comprising a base (1) and a square column (2) movably connected to the base (1). The square column (2) is movable relatively to an end of the base (1). A first expansion piece (3) and a second expansion piece (4) are sleeved on the square column (2). The first expansion piece (3) has a first insertion groove (5) on a side. The first expansion piece (3) has a first insertion piece (6) on one end. The first insertion piece (6) has a first bending portion (7) which is in contact with the square column (2). The second expansion piece (4) has a second insertion groove (8) on a side. The second expansion piece (4) has a second insertion piece (9) on one end. The second insertion piece (9) has a second bending portion (10) which is in contact with the square column (2). The four sides of the expansion connector for connecting square tubes are all expanded to contact the inner sides of the square tubes. In this way, the connection between the expansion connector and the square tubes becomes firmer to avoid the disengagement of the square tubes.

## Description

### Technical Field

The present disclosure relates to the field of connectors, and more particularly, to an expansion connector for connecting square tubes.

### Background

Most of shelves use square tubes as the frame, and a plate is placed between adjacent square tubes as a cabinet surface. A fixed connection is required between square tubes in different directions. At present, corner connections are available in the markets, but the corner connections would be exposed on the outside of the square tubes, and the overall appearance of the shelf may be affected. A welded connection is also possible between the square tubes, but the welded connection is both complicated and expensive. Besides, the welded connection is a non-detachable connection, and the square tube can no longer be recycled after the welding. It is also possible to use an embedded riveting connection where the rivet is exposed on the outside of the square tube and may affect the appearance of the shelf. There is also a problem that the rivet might not be firmly connected. The final approach is to use an expansion connector for the square tubes, but in the prior arts the expansion connector for connecting the square tubes suffer from a major disadvantage in that the expansion pieces and the fastening pieces are no longer firmly engaged after a long time of usage. This may weaken the expansion force of the expansion pieces to a certain extent that the connection between the square tubes would fail.

The Chinese patent publication CN107575443A discloses a square tube connecting device with an embedded expansion square connector comprising a base, an expansion square connector and a middle column. The expansion square connector comprises a square connector 1 and a square connector 2 each having an expanding capability. A boss is arranged on the surface of the base. The boss comprises a threaded hole. The square connector 1 is disposed outside the boss. The middle column is a stepped column, and the thinner part of the middle column is inserted from an end of the square connector 2 to an inner cavity of the square connector 1 and the square connector 2. A through hole is arranged inside the middle column. A screw matched with the threaded hole passes through the through hole to fix the middle column, the square connector 1, the square connector 2 and the base together as an integral body. Such a structure has the following disadvantages: Firstly, when the square connector 1 and the square connector 2 engage with each other, only the left and right sides thereof can expand to support the structure. The supporting effect might be poor and easily cause the square tubes to fall off due to an insufficient supporting force. Secondly, the engaging portion between the square connector 1 and the square connector 2 is prone to slack after use, which may cause the two square connectors to disengage from each other.

Therefore, an expansion connector which provides a stronger supporting force to enable multiple usages is desired.

### Summary

It is one objective of the present disclosure to solve some problems of the prior arts by providing an expansion connector to connect square tubes.

An expansion connector for connecting square tubes according to an embodiment comprises a base and a square column movably connected to the base. The square column is movable relatively to an end of the base. A first expansion piece and a second expansion piece are sleeved on the square column. The first expansion piece has a first insertion groove on a side thereof. The first expansion piece has a first insertion piece on one end thereof. The first insertion piece has a first bending portion which is in contact with the square column. The second expansion piece has a second insertion groove on a side thereof. The second expansion piece has a second insertion piece on one end thereof. The second insertion piece has a second bending portion which is in contact with the square column. The first insertion piece is in detachable engagement with the second insertion groove. The second insertion piece is in detachable engagement with the first insertion groove. When the first insertion piece and the second insertion piece respectively abut the second insertion groove and the first insertion groove, each side of the first expansion piece and each side of the second expansion piece are expanded to abut against the inner sides of the square tube.

In another embodiment, the first insertion groove is positioned on one edge of the square column and the second insertion groove is positioned on another edge of the square column.

In another embodiment, the first insertion piece has a first inclined surface and a first locking surface. The second insertion groove has a second inclined surface and a second locking surface. The first inclined surface is in sliding contact with the second inclined surface. The first locking surface is in detachable contact with the second locking surface, and when the first inclined surface and the second inclined surface slide relatively to each other, the first locking surface moves away from the second locking surface so that the second expansion piece expands to abut against the inner sides of the square tube.

In another embodiment, the second insertion piece has a third inclined surface and a third locking surface. The first insertion groove has a fourth inclined surface and a fourth locking surface. The third inclined surface is in sliding contact with the fourth inclined surface. The third locking surface is in detachable contact with the fourth locking surface, and when the third inclined surface and the fourth inclined surface slide relatively to each other, the third locking surface moves away from the fourth locking surface so that the second expansion piece expands to abut against the inner sides of the square tube.

In another embodiment, a first boss is disposed at a connecting end of the base and the square column. The first expansion piece abuts against one end of the first boss, a second boss is disposed at an end of the square column pointing away from the base, and the second expansion piece abuts against one end of the second boss.

In another embodiment, a threaded hole is arranged on the base. A through hole is arranged in the square column. A bolt is inserted into the through hole, and one end of the bolt is connected with the threaded hole.

In another embodiment, the first insertion piece is formed by extending an end of the first expansion piece, and the second insertion piece is formed by extending an end of the second expansion piece.

In another embodiment, the first expansion piece is identical to the second expansion piece, and the first insertion piece is identical to the second insertion piece.

An advantage of the present disclosure over prior arts lies in that the four sides of the expansion connector for connecting square tubes can all expand to contact the inner sides of the square tubes.

In this way, the connection between the expansion connector and the square tubes becomes firmer. The square tubes can be prevented from falling off. The first expansion piece and the second expansion piece are both attached to the square tube. The first insertion groove and the second insertion groove are both located at the edges of the square tube. It is ensured that the other three corners of the expansion piece can provide a greater resilience to enable multiple usages and prolong the lifetime of the expansion connector.

### Brief Description of the Drawings

Figure 1 is a structural schematic of an expansion connector for connection square tubes according to an embodiment.
Figure 2 is a partial structural schematic of Figure 1.
Figure 3 is an explosive view of Figure 2.
Figure 4 is another perspective view of Figure 3.

### Reference Numbers:

base 1, square column 2, first expansion piece 3, second expansion piece 4, first insertion groove 5, first insertion piece 6, first bending portion 7, second insertion groove 8, second insertion piece 9, second bending portion 10, first inclined surface 11, first locking surface 12, second inclined surface 13, second locking surface 14, third inclined surface 15, third locking surface 16, fourth inclined surface 17, fourth locking surface 18, first boss 19, second boss 20, threaded hole 21, through hole 22, bolt 23.

### Detailed Description

Embodiment of the present disclosure are described hereinafter in combination with the accompanying drawing to illustrate the technical solution of the present disclosure, which is not limited to the described embodiments.

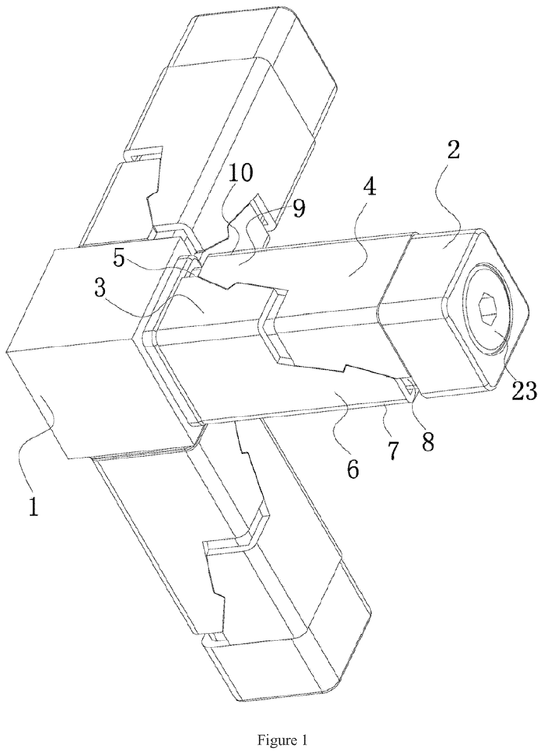

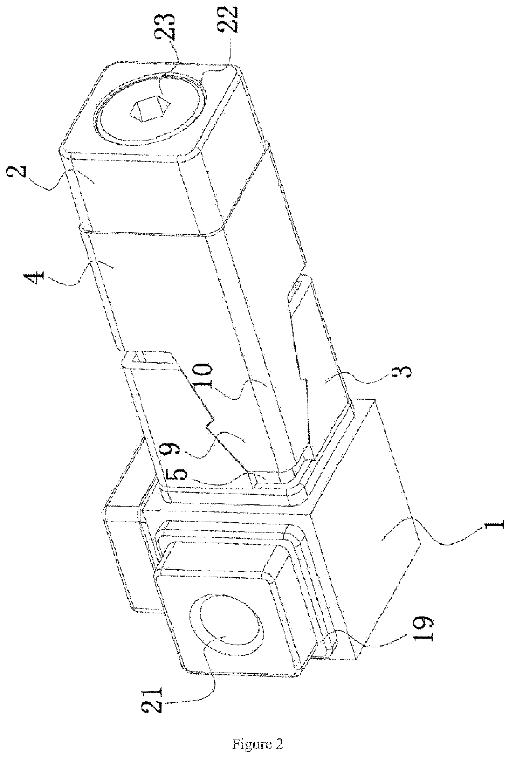

As shown in Figure 1 and 2, the expansion connector for connecting square tubes includes a base 1 and a square column 2 movably connected to the base 1. The square column 2 can move towards or away from an end of the base 1. A first expansion piece 3 and a second expansion piece 4 are sleeved on the square column 2. The first expansion piece 3 has a first insertion groove 5 on a side thereof. The first expansion piece 3 has a first insertion piece 6 on one end thereof. The first insertion piece 6 has a first bending portion 7 which is in contact with the edges of the square column 2. The second expansion piece 4 has a second insertion groove 8 on a side thereof. The second expansion piece 4 has a second insertion piece 9 on one end thereof. The second insertion piece 9 has a second bending portion 10 which is in contact with the edges of the square column 2. The first insertion piece 6 is in detachable engagement with the second insertion groove 8. The second insertion piece 9 is in detachable engagement with the first insertion groove 5. When the first insertion piece 6 and the second insertion piece 9 respectively abut the second insertion groove 8 and the first insertion groove 5, each side of the first expansion piece 3 and each side of the second expansion piece 4 are expanded to abut against the inner sides of the square tube. The first insertion piece 6 has a first bending portion 7 and the second insertion piece 9 has a second bending portion 10. When the first expansion piece 3 is inserted into the second insertion groove 8, and the second insertion piece 9 is inserted into the first insertion groove 5, the first bending point 7 would be in contact with the edges of the square column 2. Therefore, as the first insertion piece 6 is gradually inserted into the second insertion groove 8, the opening of the second insertion groove 8 is forced to grow larger so that the four faces of the second expansion piece 4 can be simultaneously expanded. Then all the four faces of the second expansion piece 4 can be abutted against the inner sides of the square tube. Similar mechanism works for the second insertion piece 9 as it is inserted into the first insertion groove 5, which can make the connection between the expansion connector and the square tube firmer and avoiding the disengagement of the square tube from the expansion connector. The connection would be improved compared to the embedded expansion connector described in the applicant's Chinese publication CN107575443A.

The first insertion groove 5 is positioned on one edge of the square column 2 and the second insertion groove 8 is positioned on another edge of the square column 2. In this embodiment, as the first insertion piece 6 is gradually moved backward, the size of the opening of the second insertion groove 8 would be gradually reduced. The second insertion groove 8 is also located at the edge of the square column 2. The first expansion piece 3 is slidably attached the square column 2 since it comprises three folding angles matched with the square column 2. The three folding angles can provide resilience for the rebounding of the first expansion piece 3, and a similar mechanism is applied to the second expansion piece 4. An improved rebounding force of the first expansion piece 3 would prolong the life span of the expansion connector.

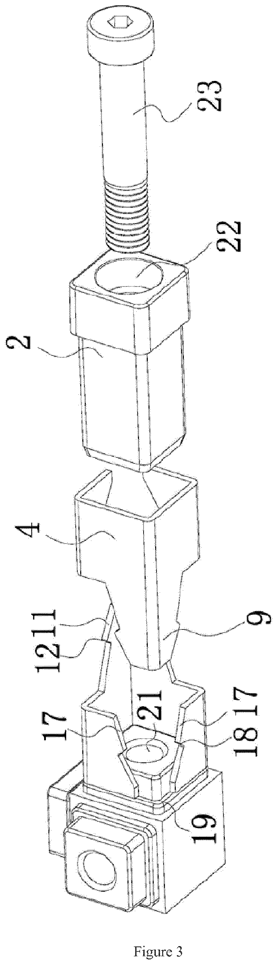

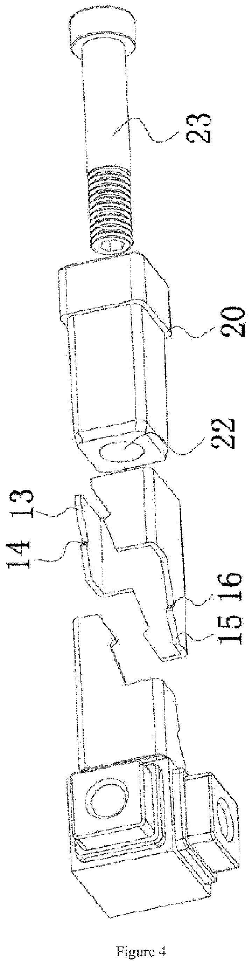

As shown in Figure 3 and 4, the first insertion piece 6 has a first inclined surface 11 and a first locking surface 12. The second insertion groove 8 has a second inclined surface 13 and a second locking surface 14. The first inclined surface 11 is in sliding contact with the second inclined surface 13. The first locking surface 12 is in detachable contact with the second locking surface 14. When the first inclined surface 11 and the second inclined surface 13 slide relatively to each other, the first locking surface 12 moves away from the second locking surface 14 so that the second expansion piece 4 expands to abut against the inner sides of the square tube.

The second insertion piece 9 has a third inclined surface 15 and a third locking surface 16. The first insertion groove 5 has a fourth inclined surface 17 and a fourth locking surface 18. The third inclined surface 15 is in sliding contact with the fourth inclined surface 17. The third locking surface 16 is in detachable contact with the fourth locking surface 18. When the third inclined surface 15 and the fourth inclined surface 17 slide relatively to each other, the third locking surface 16 moves away from the fourth locking surface 18 so that the second expansion piece 4 expands to abut against the inner sides of the square tube.

Because the first inclined surface 11 and the second inclined surface 13 are in sliding contact, the first inclined surface 11 and the second inclined surface 13 can slide relatively to each other. The first locking surface 12 can move towards or away from the second locking surface 14. When the first locking surface 12 moves away from the second locking surface 14, the first inclined surface 11 would move forward and the second inclined surface 13 would move backward. The contact area of the first inclined surface 11 and the second inclined surface 13 decreases, so the first inclined surface 11 will push the second inclined surface 13 outward. Then the size of the opening of the second insertion groove 8 is enlarged, and the four faces of the second expansion piece 4 can be expanded outward to be in contact with the inner sides of the square tube. The connection of the square tubes is achieved by such an embodiment.

A first boss 19 is disposed at a connecting end of the base 1 and the square column 2. One end of the first expansion piece 3 abuts against one end of the first boss 19. A second boss 20 is disposed at an end of the square column 2 pointing away from the base 1, and the second expansion piece 4 abuts against one end of the second boss 20.

When the square column 2 gets close to the base 1, the first boss 19 can provide a pushing force to the first expansion piece 3, so that the first expansion piece 3 moves toward the second boss 20.

The second boss 20 induces a pushing force to the second expansion piece 4 to move the second expansion piece 4 in the direction of the base 1. The first expansion piece 3 and the second expansion piece 4 can drive each of the first inserting piece 6 and the second inserting piece 9 to be inserted into a corresponding one of the first insertion groove 5 and the second insertion groove 8 are inserted. The four sides of each of the first expansion piece 3 and the second expansion piece 4 can be expanded to connect the expansion connector to the square tubes.

A threaded hole 21 is arranged on the base 1. A through hole 22 is arranged in the square column 2. A bolt 23 is inserted into the through hole 22. One end of the bolt 23 is connected with the threaded hole 22. The square column 2 can be moved towards or away from the base 1.

The first insertion piece 6 is formed by extending an end of the first expansion piece 3, and the second insertion piece 9 is formed by extending an end of the second expansion piece 4.The first expansion piece 3 is identical to the second expansion piece 4, and the first insertion piece 6 is identical to the second insertion piece 9.

Exemplary embodiments hereinabove are merely illustrative aspects of the principle of the present disclosure. The skilled in the art would practice various modifications or additions on the described embodiments without departing from the true scope of the present disclosure.

## Claims

1. An expansion connector for connecting square tubes, comprising:
a base and a square column movably connected to the base, wherein
the square column is movable relatively to an end of the base,
a first expansion piece and a second expansion piece are sleeved on the square column,
the first expansion piece has a first insertion groove on a side thereof,
the first expansion piece has a first insertion piece on one end thereof,
the first insertion piece has a first bending portion which is in contact with the square column,
the second expansion piece has a second insertion groove on a side thereof,
the second expansion piece has a second insertion piece on one end thereof,
the second insertion piece has a second bending portion which is in contact with the square column,
the first insertion piece is in detachable engagement with the second insertion groove,
the second insertion piece is in detachable engagement with the first insertion groove, and
when the first insertion piece and the second insertion piece respectively abut the second insertion groove and the first insertion groove, each side of the first expansion piece and each side of the second expansion piece are expanded to abut against the inner sides of the square tube.

2. The expansion connector of claim 1, wherein the first insertion groove is positioned on one edge of the square column and the second insertion groove is positioned on another edge of the square column.

3. The expansion connector of claim 2, wherein the first insertion piece has a first inclined surface and a first locking surface, the second insertion groove has a second inclined surface and a second locking surface, the first inclined surface is in sliding contact with the second inclined surface, the first locking surface is in detachable contact with the second locking surface, and when the first inclined surface and the second inclined surface slide relatively to each other, the first locking surface moves away from the second locking surface so that the second expansion piece expands to abut against the inner sides of the square tube.

4. The expansion connector of claim 2, wherein the second insertion piece has a third inclined surface and a third locking surface, the first insertion groove has a fourth inclined surface and a fourth locking surface, the third inclined surface is in sliding contact with the fourth inclined surface, the third locking surface is in detachable contact with the fourth locking surface, and when the third inclined surface and the fourth inclined surface slide relatively to each other, the third locking surface moves away from the fourth locking surface so that the second expansion piece expands to abut against the inner sides of the square tube.

5. The expansion connector of claim 1, wherein a first boss is disposed at a connecting end of the base and the square column, the first expansion piece abuts against one end of the first boss, a second boss is disposed at an end of the square column pointing away from the base, and the second expansion piece abuts against one end of the second boss.

6. The expansion connector of claim 5, wherein a threaded hole is arranged on the base, a through hole is arranged in the square column, a bolt is inserted into the through hole, and one end of the bolt is connected with the threaded hole.

7. The expansion connector of claim 1, wherein the first insertion piece is formed by extending an end of the first expansion piece, and the second insertion piece is formed by extending an end of the second expansion piece.

8. The expansion connector of claim 7, wherein the first expansion piece is identical to the second expansion piece, and the first insertion piece is identical to the second insertion piece.
